# EUROPEAN PATENT APPLICATION

(11) **EP 4 113 395 A1**
(43) Date of publication of application: **04.01.2023**
(21) Application number: 21305894.4
(22) Date of filing: 29.06.2021
(51) Int. Cl.: G06N 5/02, G06N 20/00

(54) **SYSTEM AND METHOD FOR KNOWLEDGE-BASED REASONING OF AN AUTONOMOUS SYSTEM**

(71) Applicant: Université de Caen Normandie, 14032 Caen Cedex 5 (FR); Centre National de la Recherche Scientifique - CNRS, 75794 Paris Cedex 16 (FR); Ecole Nationale Supérieure d'Ingénieurs de Caen, 14050 Caen Cedex 4 (FR)
(72) Inventor: MOUADDIB, Abdel-Ilah, 14032 Caen (FR); JEANPIERRE, Laurent, 14610 Epron (FR)
(74) Representative: BCF Global

(57) **Abstract**

Methods of and systems for knowledge-based reasoning to establish a list of active objectives by an autonomous system. The method comprises accessing a list of active objectives; accessing a first database populated with static environment properties, the static environment properties defining properties of entities, the entities defining an environment in which the autonomous system is configured to operate; accessing a second database populated with dynamic environment properties comprising third computer-readable instructions generated by the autonomous system based on events having been observed by the autonomous system. Upon observing a new event, a new dynamic environment property is generated based on the new event and coherence checking is executed to assess whether the new dynamic environment property conflicts with at least one of the static environment properties, and, if so, the new dynamic environment property being identified as incoherent.

## Description

### FIELD

The present technology relates to systems and methods for knowledge-based reasoning of autonomous systems and, more particularly, to identification of abnormal events and objective generation by intelligent autonomous systems.

### BACKGROUND

Recent developments in autonomous decision-making processes has been a major step in developing autonomous systems. Potential applications cover a wide range of domains such as, but not limited to, assistive humanoid robotic systems, or network flow monitoring and managing systems. Autonomous systems are expected to perform tasks to satisfy a user, an interacting human, or any object requiring assistance while abiding by predefined and/or changing rules. Such autonomous systems developed for handling various activities may therefore need to be able to detect abnormal occurring events or abnormal situations to further identify objectives to be fulfilled to address said abnormal situations.

Even though the recent developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art.

In particular, such shortcomings may comprise (1) inadaptability of definition of abnormal events; (2) inappropriateness of a behavior of the autonomous system depending on a given environment in which it is configured to operate; and/or (3) unsuitability of objective generation.

In one aspect, various implementations of the present technology provide a computer-implemented method for knowledge-based reasoning to establish a list of active objectives by an autonomous system. The method comprises accessing a list of active objectives, each one of the active objectives comprising a set of parameters and first computer-readable instructions which upon being executed by the autonomous system result in the autonomous system performing a task in accordance with the set of parameters. The method comprises accessing a first database populated with static environment properties, the static environment properties comprising second computer-readable instructions defining properties of entities and relations between the entities. The entities and the relations between the entities define an environment in which the autonomous system is configured to operate. The method comprises accessing a second database populated with dynamic environment properties, the dynamic environment properties comprising third computer-readable instructions generated by the autonomous system based on events having been observed by the autonomous system, the events having occurred during operation of the autonomous system in the environment. Upon observing, by the autonomous system, a new event in the environment, the method comprises generating a new dynamic environment property based on the new event; entering the new dynamic environment property to the second database; executing coherence checking on the new dynamic environment property and the static environment properties, the coherence checking comprising comparing the new dynamic environment property with the static environment properties to assess whether the new dynamic environment property conflicts with at least one of the static environment properties; and identifying the new dynamic environment property as incoherent if determination is made that the new dynamic environment property conflicts with at least one of the static environment properties.

In some embodiments of the method, the method further comprises determining whether the new dynamic environment property is incoherent. If the new dynamic environment property is incoherent, the method comprises accessing a third database populated with candidate objectives, each one of the candidate objectives comprising fourth computer-readable instructions which upon being executed by the autonomous system result in generating the first computer-readable instructions; generating a new active objective from the candidate objectives based on the new event; and entering the new active objective to the list of active objectives.

In some embodiments of the method, the execution of coherence checking comprises: if determination is made that the new dynamic environment property is conflicting with at least one static environment properties of the first database, marking the new dynamic environment property as incoherent, a conflict between the new dynamic environment property and at least one static environment properties being caused by an opposition of their respective computer-readable instructions; and identifying the new dynamic environment property as coherent otherwise.

In some embodiments of the method, generating a new active objective from the candidate objectives based on the new event comprises: selecting a candidate objective from the candidate objectives of the third database; generating new active objective parameters based on the new event; and associating the new active objective parameters to the selected candidate objective.

In some embodiments of the method, each candidate objective of the third database comprises an activation condition, the activation condition corresponding to one or more dynamic environment properties and the activation condition being fulfilled if determination is made that the corresponding one or more dynamic environment properties are found in the second database, and a selection of a candidate objective from the candidate objectives of the third database is based on the activation condition of the candidate objective.

In some embodiments of the method, the first database further comprises common-sense rules, each common-sense rule comprising fifth computer-readable instructions defining general properties of the entities and general relations between the entities, each general property being property of a group of entities and each general relation between the entities being relation between groups of entities.

In some embodiments of the method, the common-sense rules are populated by an operator of the autonomous system and describe a cultural context of the environment in which the autonomous system is configured to operate.

In some embodiments of the method, the operator employs a Machine Learning Algorithm (MLA) to generate one or more of the common-sense rules.

In some embodiments of the method, upon entering a new dynamic environment property based on a new event in the second database, coherence checking is further executed on the new dynamic environment property and the common-sense rules, and if determination is made that the new dynamic environment property conflicts with at least one of the common-sense rules: accessing the third database populated with candidate objectives; generating a new active objective from the candidate objectives based on the new event; and entering the new active objective to the list of active objectives.

In some embodiments of the method, upon entering a new dynamic environment property in the second database, coherence checking is further executed on the new dynamic environment property and the list of active objectives, and, if determination is made that the new dynamic environment property conflicts with at least one of the active objectives, removing the at least one of the active objectives from the list of active objectives.

In some embodiments of the method, the dynamic environment properties are associated with one or more characteristics of the corresponding event, the characteristics being selected in a group of characteristics comprising: one or more actors of the event, a location of the event, a time of the event and an action performed by the one or more actors of the event.

In some embodiments of the method, one or more dynamic environment properties describing meta-events are generated if determination is made that predefined combinations of dynamic environment properties are found in the second database, each predefined combination of dynamic environment properties corresponding to a meta-event and causing a generation of a corresponding dynamic environment property in the second database.

In a second aspect, various implementations of the present technology provide a computer-readable support comprising instructions which, upon execution of the instructions, cause a computer to carry out the steps of the method.

In a third aspect, various implementations of the present technology provide an autonomous system configured to manage a list of active objectives. Each one of the active objectives comprises a set of parameters and first computer-readable instructions which upon being executed by the autonomous system results in the autonomous system performing a task in accordance with the set of parameters. The system comprises one or more sensing devices configured to detect events, the events occurring or having occurred in an environment in which the autonomous system is configured to operate. The system comprises a memory comprising a first database populated with static environment properties, the static environment properties comprising second computer-readable instructions defining properties of entities and relations between the entities, the entities and the relations between the entities defining the environment. The memory comprises a second database populated with dynamic environment properties, the dynamic environment properties comprising third computer-readable instructions generated by the autonomous system based on the detected events; and a third database comprising candidate objectives. The system comprises a processor operably coupled to the memory and configured to execute instructions that, when executed, results in operations comprising, upon observing, by the autonomous system, a new event in the environment, generating a new dynamic environment property based on the new event. The system is configured to enter the new dynamic environment property to the second database and execute coherence checking on the new dynamic environment property and the static environment properties, the coherence checking comprising comparing the new dynamic environment property with the static environment properties to assess whether the new dynamic environment property conflicts with at least one of the static environment properties. The system is configured to, if determination is made that the new dynamic environment property conflicts with at least one of the static environment properties, access the third database populated with candidate objectives, each one of the candidate objectives comprising fifth computer-readable instructions which upon being executed by the autonomous system result in generating the first computer-readable instructions, generate a new active objective from the candidate objectives based on the new event, and enter the new active objective to the list of active objectives.

In some embodiments of the system, upon executing coherence checking, the processor is further configured to, if determination is made that the new dynamic environment property is conflicting at least one static environment properties of the first database, mark the new dynamic environment property as incoherent, a conflict between the new dynamic environment property and at least one static environment properties being caused by an opposition of their respective computer-readable instructions; and identify the new dynamic environment property as coherent otherwise.

In some embodiments of the system, the first database further comprises common-sense rules, each common-sense rule comprising fourth computer-readable instructions defining general properties of the entities and general relations between the entities, each general property being property of a group of entities and each general relation between the entities being relation between groups of entities.

In some embodiments of the system, upon entering a new dynamic environment property in the second database, the new dynamic environment property being based on anew event, coherence checking is further executed on the new dynamic environment property and the common-sense rules. If determination is made that the new dynamic environment property conflicts with at least one of the common-sense rules, the system is configured to access the third database populated with candidate objectives, generate a new active objective from the candidate objectives based on the new event and enter the new active objective to the list of active objectives.

In some embodiments of the system, the system is configured to select a candidate objective from the candidate objectives of the third database, generate new active objective parameters based on the new event and associate the new active objective parameters to the selected candidate objective to generate a new active objective from the candidate objectives based on the new event comprises.

In some embodiments of the system, each candidate objective of the third database comprises an activation condition, the activation condition corresponding to one or more dynamic environment properties and the activation condition being fulfilled if determination is made that the corresponding one or more dynamic environment properties are found in the second database, and a selection of a candidate objective from the candidate objectives of the third database is based on the activation condition of the candidate objective.

In some embodiments of the system, upon entering a new dynamic environment property in the second database, coherence checking is further executed on the new dynamic environment property and the active objectives, and, if determination is made that the new dynamic environment property conflicts with at least one of the active objectives, removing the at least one of the active objectives from the list of active objectives.

In some embodiments of the system, the processor is further configured to determine a number of occurrences of a dynamic environment property in the second database, and, if determination is made that the number of occurrence is higher than a first threshold, generate a static environment property based on the computer-readable instructions of the corresponding dynamic environmental property.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a high-level schematic diagram of an autonomous system in accordance with an embodiment of the present technology;
Figure 2 is a diagram of a computing system in accordance with an embodiment of the present technology; and
Figure 3 is a high-level schematic of a knowledge-based reasoning module in accordance with an embodiment of the present technology.

It should also be noted that, unless otherwise explicitly specified herein, the drawings are not to scale.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general-purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

The present technology provides more self-sufficiency to autonomous systems by enabling such systems to identify incoherent events, or "abnormal" events, and generate a list of active objectives to be fulfilled to address said events. Therefore, the systems may be able to sense and interact with the surrounding environment. Autonomous systems in accordance with the present technology may perform a coherence checking of detected events by using "common-sense" knowledge. For instance, a person lying on the ground in a mall may be an event considered as an incoherent with respect to the "common sense" knowledge. If an event is considered incoherent, the autonomous system may perform corrective actions.

Various aspects of the present disclosure generally address one or more of the problems found in conventional autonomous systems. To this end, the present disclosure, amongst other aspects, introduces intelligent autonomous system configured to generate and execute assistive action strategies.

With these fundamentals in place, we will now consider some non-limiting examples to illustrate various implementations of aspects of the present technology.

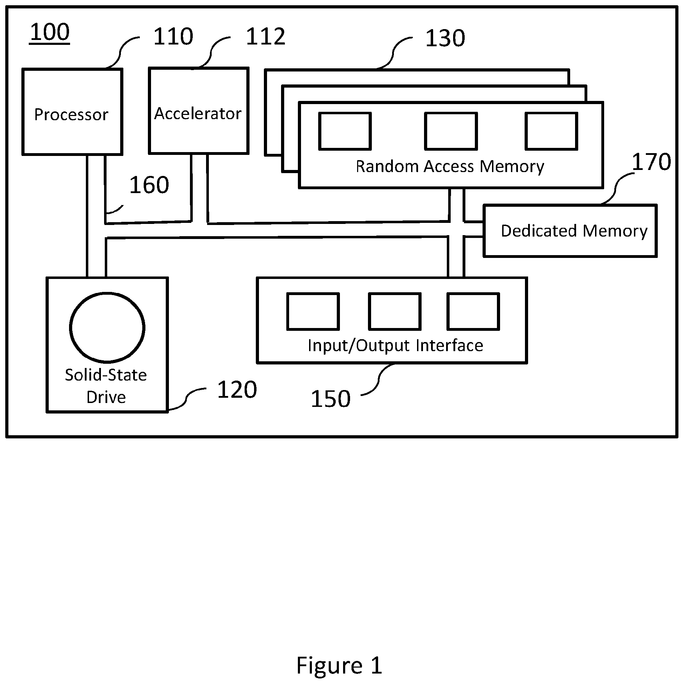

With reference to Figure 1, there is shown a computer system 100 suitable for use in accordance with at least some embodiments of the present technology. The computer system 100 may be implemented by any of a conventional personal computer, a network device and/or an electronic device (such as, but not limited to, a mobile device, a tablet device, a server, a controller unit, a control device, etc.), and/or any combination thereof appropriate to the relevant task at hand. In some embodiments, the computer system 100 comprises various hardware components including one or more single or multi-core processors collectively represented by processor 110, a solid-state drive 120, a random-access memory 130, and an input/output interface 150. The computer system 100 may be a computer specifically designed to operate a machine learning algorithm (MLA). The computer system 100 may be a generic computer system. The computer system 100 may be integrated in a robotic vehicle and/or may be configured to control a robotic vehicle.

In some embodiments, the computer system 100 may also be a subsystem of one of the above-listed systems. In some other embodiments, the computer system 100 may be an "off-the-shelf' generic computer system. In some embodiments, the computer system 100 may also be distributed amongst multiple systems. The computer system 100 may also be specifically dedicated to the implementation of the present technology. As a person in the art of the present technology may appreciate, multiple variations as to how the computer system 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid-state drive, hard disk drive, a magnetic disk drive, and/or an optical disk drive.

Communication between the various components of the computer system 100 may be enabled by a system bus 160 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may provide networking capabilities such as wired or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example, the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the one or more internal and/or external buses 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown) or a trackpad (not shown) allowing the user to interact with the computer system 100 in addition to or instead of the touchscreen 190.

According to some implementations of the present technology, the solid-state drive 120 stores program instructions suitable for being loaded into the random-access memory 130 and executed by the processor 110 for executing acts of one or more methods described herein. For example, at least some of the program instructions may be part of a library or an application.

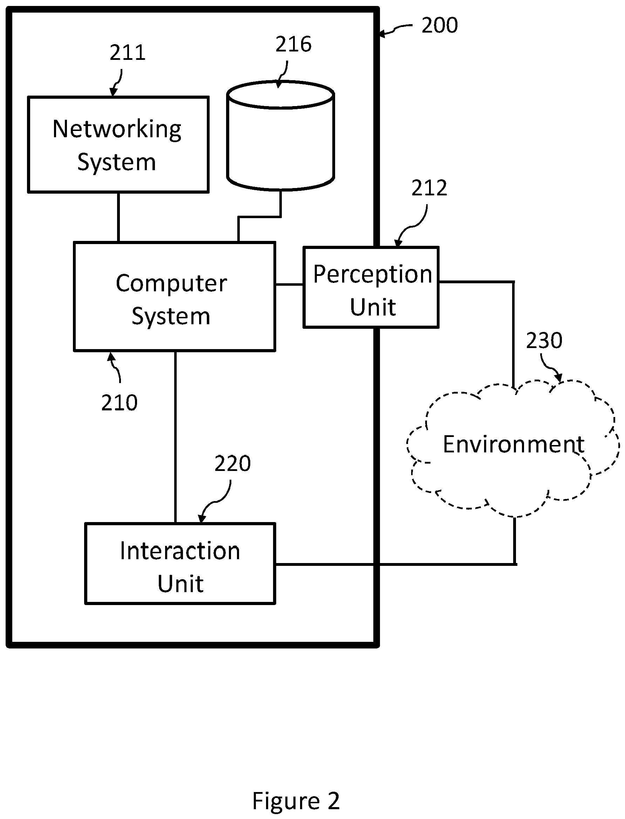

Figure 2 illustrates a high-level schematic diagram of an autonomous system 200 in accordance with an embodiment of the present technology. The autonomous system 200 may comprise a computer system 210. The computer system 210 may be the computer system 100 and/or may include some or all of the components of the computer system 100. The computer system 210 may be internal or external with respect to the autonomous system and is communicably connected to the autonomous system 200. In one embodiment, the computer system 210 may be external and communicably connected to a plurality of autonomous systems 210 via a network (not shown). The autonomous system may comprise a networking device 211 communicably connected to the computer system 210 and receiving instructions, dynamic environment properties, or any other information for operation of the autonomous system 200.

The autonomous system 200 may operate within an environment 230 to operate assistive tasks for example. The environment 230 may be without limitation a physical environment, such as a shopping center, an office or the like, or may be a logical environment, such as a computing device network, an electrical grid, or the like. The environment 230 may include entities such as, without limitation, shops, doors, corridor, people or any other entity whose features may be relevant to perform an assistive task in the case of a physical environment 230; and processors, networking devices, interfaces or any other entity whose features may be relevant to perform an assistive task in the case of a logical environment 230. Therefore, the entities and relations between the entities may be used to define the environment 230.

The autonomous system 200 comprises an interaction unit 220 configured to cause the autonomous system 200 to interact within the environment 230 by executing active objectives. The interaction unit 220 may operate interactive elements such as a human-machine interface, one or more screens, speakers, microphone, physical actuators, a driving system or any suitable system that may be used to interact within a physical environment if the environment 230 is a physical environment, or logical actuators, a processor, or any suitable system that may be used in a logical environment if the environment 230 is a logical environment.

The autonomous system 200 is configured to capture raw data in the environment 230 via a perception unit 212. The perception unit 212 may comprise a Human-Machine interface, sensors such as cameras, LiDAR sensors or any type of sensing devices adapted for a physical environment 230, and may comprise ammeters, dataflow sensors, connexion indicators, or any type of sensors adapted for a logical environment 230. The perception unit 212 may also comprise internal sensors configured to give information about a state of the autonomous system 200 and/or components of the autonomous system 200. For instance, the perception unit 212 may comprise sensors to give information about a level of battery of the autonomous system 200. The raw data may be processed by the computer system 210 communicably connected to the perception unit 212.

The computer system 210 is configured to generate dynamic environment properties, or "facts", under the form of computer-readable instructions to describe events occurring in the environment 230, execute coherence checking of the generated dynamic environment properties and further interact with the entities of the environment 230 if determination is made the one or more dynamic environment properties are incoherent, or "abnormal". Such computer-readable instructions may be predicate expressions that make declarative statements about the events. A process of the execution of coherence checking is described in greater details hereinafter.

The computer system 210 may be configured to store the dynamic environment properties and any information that may be used by the computer system 210 in a memory 216 under specific computer-readable formats described hereinafter. The memory 216 may be embedded in the autonomous system 200 or located in an external physical location. The computer system 210 may be configured to access a content of the memory 216 via a network (not shown) such as a Local Area Network (LAN), a wireless connexion such as a Wireless Local Area Network (WLAN) and/or any non local radio communication systems (i.e. 4G, 5G, 6G, SIGFOX^{™}).

The memory 216 may comprise candidate objectives under specific computer-readable formats described hereinafter. One or more candidate objectives may be activated by the computer system 210 upon detection of an abnormal event, thereby defining one or more corresponding "active objectives". The active objectives may be further executed and/or transmitted to an operator of the autonomous system 200 to address the corresponding abnormal event. The active objectives may be stored in the memory 216.

In order to lighten the present disclosure, following examples relates to a physical environment 230. This is done merely to ease the reading of the present disclosure, and, again, not to define the scope or set forth the bounds of the present technology.

The computer system 210 is configured to use dynamic environment properties to describe events in the environment 230. Each dynamic environment property may be a computer-readable instruction that comprises event-based statements. An event-based statement is a predefined description function having one or more parameters, the predefined description function representing a characteristic of a corresponding event. For instance, a person identified *as p1* and detected as running may be described by the computer system 210 with the event-based statement *running(p1),* where *running()* is a predefined description function *and p1* a parameter. An event may correspond to a logical association of event-based statements such as *running(p1)*∧*adult(p1),* representing the event of an adult identified *as p1* running. In this illustrative example, *running(p1)*∧*adult(p1)* is a dynamic environment property being a conjunction of two event-based statements: *running(p1)* and *adult(p1).* As persons skilled in the art would understand, there may be a finite number of detectable events for the autonomous system 200 given a certain computer system 210 and a certain perception unit 212, and therefore a finite number of predefined description functions, as their detection depends at least on an accuracy of the sensing devices comprised in the perception unit 212.

The aforementioned representation of a dynamic environment property with event-based statement is not a limitative aspect of the present technology. It is rather one illustrative embodiment among other possible embodiments as representation of events occurring in the environment 230 may have different computer-readable implementations. Dynamic environment properties may be represented by other forms of logic formulas. The event-based statements described hereinabove may take the form of any suitable computer-readable instructions corresponding to a description of a characteristic of an event detected in the environment 230.

The perception unit 212 may be configured to execute signal processing and/or computer vision software applications to detect the occurrence of an event. In order to provide a dynamic environment property corresponding to the event, the computer system 210 is further configured to select one or more event-based statements in a list event-based statements, the list of event-based statements being a list of characteristics of events that may be detected by the perception unit 212. As an example, the perception unit 212 may detect that an adult is running in the mall. The computer system 210 may select the three following event-based statements: adult(p), at(p, mall) and running(p), where p identifies the person running. The event-based statement *adult(p)* corresponds to the detectable characteristic that the person is an adult, the event-based statement *at(p, mall)* corresponds to the detectable characteristic that the person is located in the mall and the event-based statement *running(p)* corresponds to the detectable characteristic that the person is running. The person may be listening to music with headphones. However, if the perception unit 212 is not configured to detect this characteristic, no event-based statement may be available to represent this characteristic. Therefore, this characteristic may not be a part of the dynamic environment property generated by the computer system 210.

The computing unit generates the dynamic environment property by associating the event-based statements with logical conjunctions:
E1: adult(p) A at(p, mall) ∧ running(p)

Additionally or alternatively, the computing unit may generate a description of an event under the following form: Event(id, location 1, time t, agent p, semantic) where *id* is an identifier of the event, *location I* is the location of occurrence of the event, *time t* is the time of occurrence of the event, *agent p* is an actor or subject-matter of the event and *semantic* is a semantic description of the event based on event-based statements. For instance, a semantic description may comprise the following attributes:
At | In | In front of | motionless | running | rest area | request | ...
The description of the event may be stored in the memory 216. In accordance with this embodiment, a description of the example hereinabove is the following:
Event(1, mall, 10:40, p, running(p); adult(p))

Note that a correspondence between the dynamic environment property and the description of the corresponding event is merely a choice of representation of the information. The description form may be generated from event-based statements and *vice versa.*

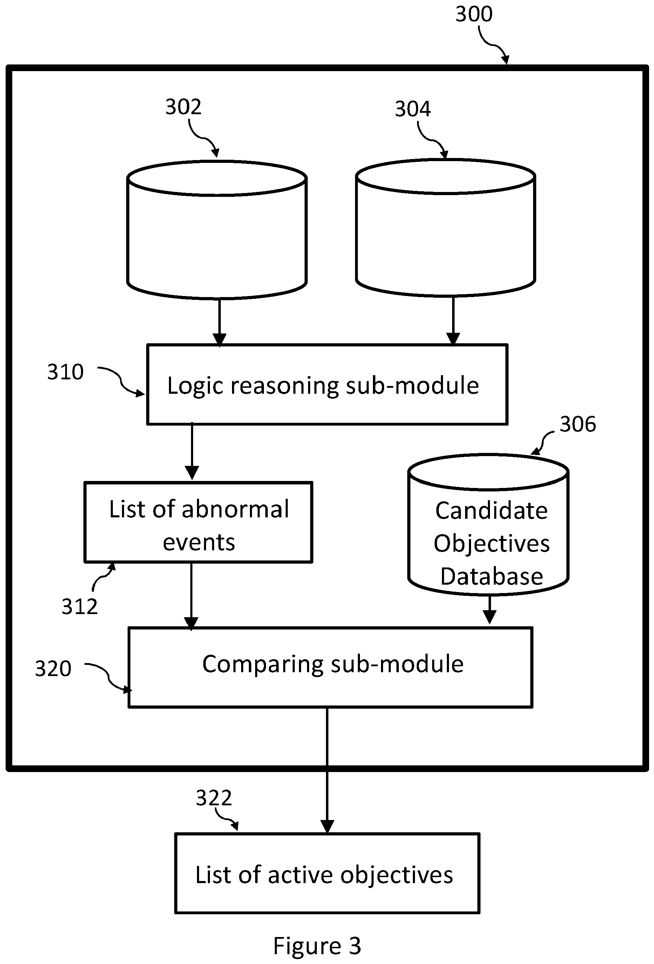

Turning now to Figure 3, a high-level schematic of a knowledge-based reasoning module 300 is illustrated. The knowledge-based reasoning module 300 may be comprised in the computer system 210 and may be configured to execute coherence checking on dynamic environment properties. To that end, the knowledge-based reasoning module 300 comprises a first database 302 configured to store static environment properties and a second database 304 configured to store dynamic environment properties. Without limitations, dynamic environment properties and static environment properties may be represented under the logic programming language PROLOG.

Static environment properties comprise computer-readable instructions configured to define properties of entities of the environment 230 and relations between the entities. For example, a semantic map of a shopping center with information relating to specific area of the shopping center may be populated in the first database 302, the entities comprising shops and/or points of interest of the shopping center. In this example, the first database 302 may comprise metric relations, topological relations, and/or qualitative spatial relations between areas and/or shops of the shopping center. More generally, the first database 302 is configured to store descriptive properties and attributes of the entities in the environment 230. In the same or another embodiment, static environment properties are represented as static statements or logical associations of static statements such as:
P1: name(store1 ; abc);
P2: sells(abc; childrenClothes);
P3: sells(abc; toys);
P4: ¬ at(p,corridor1).

The static statements are similar to the event-based statements as they are similarly represented and are composed of the similar predefined description functions. However, static statements defining static environment properties are initially populated, and may be further updated, by an operator of the autonomous system 200 in the first database 302 and do not represent events. In this embodiment, an operator may be a human operator, or an operating computer system communicably connected to the first database 302. The operating computer system may be configured to automatically populate said database based on information received by the operating computer system.

Moreover, predefined description functions of static statements may apply to every object that corresponds to the same parameter. As an example, P4, which indicate that no one should be in *corridor1,* applies to every object *p* that is a person and does not apply to one person only.

In the illustrative static environment properties hereinabove, P1 indicates that *abc* is the name of a store identified as *store1,* P2 and P3 respectively indicate that the store *abc* sells clothes for children and toys and P4 indicates that a corridor identified as *corridor1* is closed as nobody should be found here.

The static statements defining static environment properties in the first database 302 may be initially and/or further updated by an operator to update specific information. As an example, an operator may delete P4 to inform the autonomous system 200 that *corridor1* is not closed anymore and add a new static environment property to indicate that another corridor identified as *corridor2* is closed. The update of the static environment properties in the first database 302 may be a periodic automatic update based on information from the operating computer system. For example, the first database 302 may be updated with an Over-The-Air (OTA) update based on information extracted from the operating computer system.

The first database 302 further comprises common-sense rules that are computer-readable instructions populated by an operator and corresponding to common facts that all humans are expected to know, such as "children like toys", in a computer-readable format. As an example, the first database 302 may contain information that "People are generally not running in a mall" or "fire in a store is dangerous" under a computer-readable format. The common-sense rules may be adjusted by an operator to appropriate with a cultural context of the environment 230 and thereby develop a common-sense reasoning by the autonomous system 200. In one embodiment, the operator employs a Machine Learning Algorithm (MLA) to generate common-sense rules based on training datasets, the training datasets comprising training common-sense rules and information about the cultural context of the environment 230. As an example, information about the cultural context of the environment 230 may be inferred from dynamic and/or static environment properties.

For instance, a common-sense rule may indicate that a person should not run if the autonomous system 200 is to operate in a museum, while it may be normal if the autonomous system 200 operates in a sport facility.

The common-sense rules may be represented as static statements or logical associations of static statements such as:
K1: adult(p) ∧ at(p, mall) ∧ ¬running(p)
K2: at(p, mall) ∧ child(p) ∧ interestedtobuy(p, toys);
K3: at(p, mall) ∧ adult(p) ∧ (interestedtobuy (p, clothes) ∨ interested(p, restaurant)).

In the illustrative static environment properties hereinabove, K1 indicates that adult in the mall usually do no run, K2 indicates that children in the mall are usually interested to buy toys and K3 indicates that persons in the mall that are adults are usually interested to buy clothes or going to restaurants.

As another example, in a logical environment 230, a common-sense rule may indicate that a frame for digital transmission of an image does not usually comprise text or characters.

The computer system 210 may be configured to populate new common-sense rules or static environment properties in the first database 302 or send a signal, a notification or the like to an operator to suggest the population of new common-sense rules or static environment properties if determination is made that an event occurs several times. For instance, a threshold of occurrence may be associated with a first dynamic environment property by an operator. Therefore, the computer system 210 may be configured to generate a common-sense rule or a static environment property based on the first dynamic environment property when determination is made that a number of occurrences of the event corresponding to the first dynamic environment property has been exceeded. As an example, if determination is made by the autonomous system 200 that a security agent is in front a certain shop at a certain hour every day for 7 days, the knowledge-based computer system 210 may be configured to generate a static environment property in the first database 302 indicating that the security agent is in front the certain shop at the certain hour every day. It may then be "abnormal" to not detect the security agent in front said shop at said hour. Therefore, the autonomous system may adapt definitions of "abnormal" events based on occurrences of events.

The first database 302 may be partitioned into a first sub-database comprising the common-sense rules and a second sub-database comprising other static environment properties.

The second database 304 may be configured to store dynamic environment properties described hereinbefore. Unlike the first database 302, the second database 304 receives dynamic environment properties that corresponds to events having occurred or occurring in the environment 230 and detected by the perception unit 212. Hereinbelow are illustrative examples of dynamic environment properties stored in the second database:
E1 : adult(p1) ∧ at(p1, mall) ∧ running(p1) ;
E2: at(p2, mall) ∧ child(p2) ∧ ¬interestedtobuy(p2, toys).

In the illustrative dynamic environment properties hereinabove, E1 indicates that a person identified as *p1* is an adult, is at the mall and is running, and E2 indicates that a person identified as *p2* is at the mall, is a child and is not interested to buy toys. Information that *p2* is not interested to buy toys may be determined via a human-machine interface such as a touchscreen pad or any suitable manner to determine this information.

Upon observing a new event in the environment 230 with the perception unit 212, the computer system 210 generates a new dynamic environment in the second database 304 based on the new event. The generation may be performed by selecting one or more event-based statements in a list event-based statements, the list of event-based statements being a list of characteristics of events that may be detected by the perception unit 212. Therefore, the computer system 210 may be configured to select as many event-based statements that correspond to the new event according to the perception unit 212 and further generate the new dynamic environment property. Detection of characteristics may rely on computer vision methods and algorithms used by the perception unit 212. Therefore, the list of event-based statements that may be used to describe an event should be at least populated in a suitable manner so that each characteristic that may be detected by the perception unit 212 may be described by an event-based statement.

The knowledge-based reasoning module 300 may be configured to generate meta-dynamic environment properties based on a set of dynamic environment properties found in the second database 304. The meta-dynamic environment properties are dynamic environment properties that are generated if determination is made by the knowledge-based reasoning module 300 that sets of specific dynamic environment properties are present in the second database 304. The dynamic environment properties of a same set may have a common event-based statements, such as a common location, a common time of occurrence, etc. The meta-events may be generated by using event aggregation operators. For example, *running(p1)* is a meta-dynamic environment property that is generated based on other dynamic environment properties. Indeed, series of dynamic environment properties whose representations are: Event(id, location, time, person, at(person, location)) with the same person may help in detecting if this person walks slowly, rapidly or running, depending on the location and time of those events. Indeed, the distance between two locations over the duration derives the speed and the knowledge-based reasoning module 300 may be configured to classify this speed as very high, normal or slow, thereby generating the meta-dynamic environment property *running(p1)* if the speed is very high.

The first and second database 302 and 304 may be referred to as "knowledge bases" as they may comprise logical formulas under computer readable formats that describe characteristics of entities and may therefore render a knowledge of the environment 230. The first and second database 302 and 304 may be thus merged in a common "knowledge database" in alternative embodiments.

Based on contents of the first database 302 and the second database 304, the knowledge-based reasoning module 300 may be configured to detect incoherent events, or "abnormal" events as described hereinbelow. The knowledge-based reasoning module 300 comprises a logic reasoning sub-module 310 configured to execute a coherence checking procedure on every new entry in the second database 304, namely every dynamic environment property and meta dynamic environment property. Upon a new entry E0 in the second database, the logic reasoning sub-module 310 is configured to browse the first database 302. The new entry E0 is compared to every combination of common-sense rule and static environment property of the first database 302. In one embodiment, the comparison lies in a logic conjunction ∧. An illustrative and non-limitative pseudo-algorithm for coherence checking of dynamic environment property using rule-based forward reasoning is presented hereinbelow:

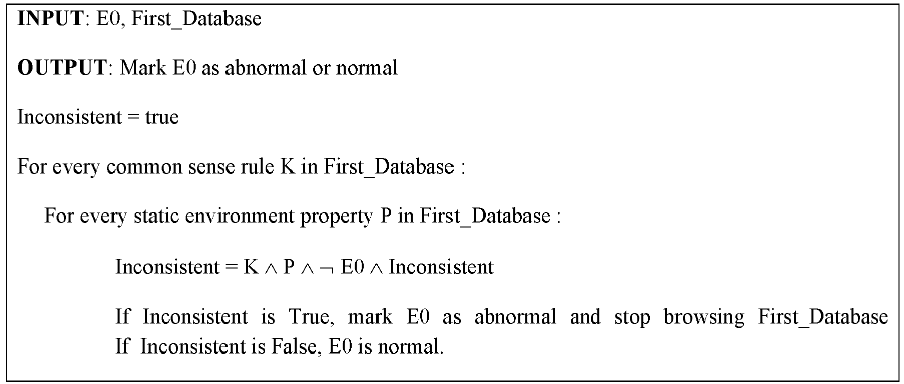

Hereinbelow is an illustrative example of an execution of coherence checking on dynamic environment properties E1 and E2:
E1: adult(p1) ∧ at(p1, mall) ∧ running(p1)
E2: child(p2) ∧ at(p2, corridor1)
K1: adult(p) ∧ at(p, mall) ∧ ¬running(p)
P1: at(p, mall) ∧ child(p) ∧ interestedtobuy(p, toys)
P2: ¬ at(p,corridor1)

Execution of coherence checking on dynamic environment properties E1 consists in checking the consistency of logical formula ¬E1 ∧ P1 ∧ K1 and ¬E1 ∧ P2 ∧ K1. In this case, the logic reasoning sub-module 310 returns inconsistency of E1 because of formulas ¬E1 ∧ P1 ∧ K1 and ¬E1 ∧ P2 ∧ K1 are inconsistent (i.e. ¬ E1 ∧ P1 ∧ K1 and ¬ E1 ∧ P2 ∧ K1 are True due inconsistency between K1 and E1). Consequently, E1 is marked as "abnormal", or "incoherent". In the same way, the logic reasoning sub-module 310 returns the inconsistency of E2 because ¬ E2 ∧ P2 ∧ K1 is inconsistent (due inconsistency between P2 and E2).

Upon determining that a dynamic environment property is abnormal, which corresponds to an incoherent event in the environment 230, the logic reasoning sub-module 310 may add the abnormal dynamic environment property to a list of abnormal dynamic environment properties, or "list of abnormal events" 312. As the second database 304 is continuously populated with new dynamic environment properties, the list of abnormal dynamic environment properties 312 may be continuously updated by the logic reasoning sub-module 310.

A role of the autonomous system 200 is to interact with the environment 230 and with entities of the environment 230 to correct and resolve incoherent events. The knowledge-based reasoning module 300 comprises a candidate objectives database 306 comprising candidate objectives that may be selected, or "activated", and further executed and/or transmitted to an operator to correct and resolve incoherent events. Upon activation and execution, a candidate objective becomes an active objective for the autonomous system 200 and represent a task, or a plurality of tasks, to be performed by the autonomous system 200 to correct and resolve incoherent events. Activation of candidate objectives is explained in greater details hereinbelow.

Each candidate objective may comprise computer-readable instructions and may be described by an activation condition, or "selection condition", an identifier, an objective category (e.g. surveillance, assistance, guidance, advertisement, etc), parameters describing variable states such as location, time, object, person, etc, and a progressive task unit structure, or a combination thereof, in the following manner:
Objective(activation_condition, identifier, objective category, parameters, progressive task unit structure).

Progressive task unit structures may comprise series of tasks, instructions, action strategies or any other forms of indication of actions to be performed to fulfill the corresponding objective.

In this embodiment, an activation condition of a candidate objective may be a logic proposition that may correspond to one or more dynamic environment properties. The knowledge-based reasoning module 300 may comprise a comparing sub-module 320 configured to compare dynamic properties of the list of abnormal dynamic environment properties 312 with the activation conditions of the candidate objectives. An activation condition is fulfilled if determination is made by the comparing module 320 that the corresponding one or more dynamic environment properties are found in the list of abnormal dynamic environment properties 312. The activation condition may be dynamic environment properties with event-based statements having specific parameters in their predefined description functions or non-specific parameters. An illustrative and non-limitative pseudo-algorithm to determine candidate objective to activate is presented hereinbelow:

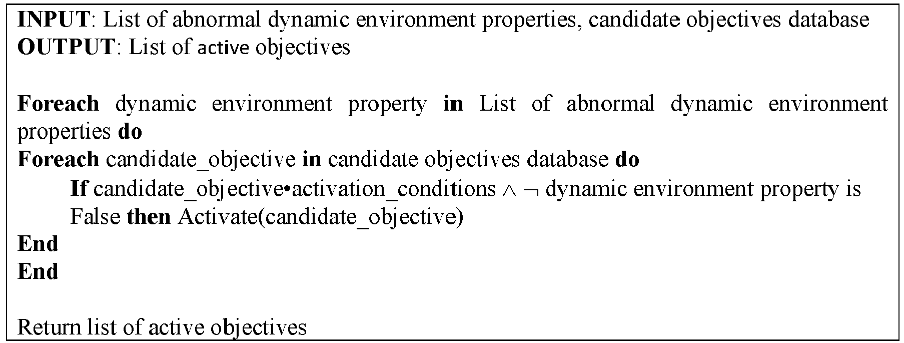

Once a candidate objective is activated, the comparing sub-module 320 is configured to execute the candidate objective by generating an active objective from the candidate objective. The comparing sub-module 320 may generate an active objective from a candidate objective by updating the parameters of the candidate objective with the parameters of the predefined description functions of the event-based statements of the dynamic environment properties that caused the activation conditions of the corresponding candidate objective to be fulfilled. Therefore, the generation of a new active objective caused by detection of a new abnormal event is based on the parameters of said abnormal event. The comparing sub-module 320 is configured to establish a list of active objectives 322 to be accomplished by the autonomous system 200. As an example, a candidate objective is presented hereinbelow:
Objective( at(object, location = mall) ∨ running(p) ∨ request_surveillance(location= 1), id, surveillance, {location, person, object}, progressive task unit structure)

If the dynamic environment property E1: adult(p1) ∧ at(p1, mall) ∧ running(p1) is marked as abnormal, the aforementioned candidate objective may be activated as *p1* may identify a person and *p* may encompass every person. Therefore, the following active objective is generated by the logic reasoning sub-module 310:
Objective (at(object, location = mall) ∨ running(p) ∨ request_surveillance(location= 1), id, surveillance, {mall, p1, Ø}, progressive task unit structure)

The list of active objectives 322 may be transmitted to an operator of the autonomous system 200 to provide information about which active objectives may be accomplished according to the autonomous system 200. The list of active objectives 322 may be further sent from the knowledge-based reasoning module 300 to an operator of the autonomous system 200 and/or transmitted to another module of the computer system 210 causing the autonomous system 200 to execute the active objectives. More precisely, the autonomous system 200 may be configured to execute the progressive task unit structures of the active objectives comprised in the list of active objectives 322.

The list of active objectives may be updated by the knowledge-based reasoning module 300. Upon a new entry in the first database 302 or in the second database 304, the logic reasoning sub-module 310 may be configured to execute coherence checking of each active objective of the list of active objectives 322 with the new entry according to the process described hereinbefore, in other words execute a "coherence checking of active objective consistency". If determination is made that one active objective is incoherent with respect to the new entry, said active objective may be removed from the list of active objectives 322.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A computer-implemented method for knowledge-based reasoning to establish a list of active objectives by an autonomous system, the method comprising:
accessing a list of active objectives, each one of the active objectives comprising a set of parameters and first computer-readable instructions which upon being executed by the autonomous system result in the autonomous system performing a task in accordance with the set of parameters;
accessing a first database populated with static environment properties, the static environment properties comprising second computer-readable instructions defining properties of entities and relations between the entities, the entities and the relations between the entities defining an environment in which the autonomous system is configured to operate;
accessing a second database populated with dynamic environment properties, the dynamic environment properties comprising third computer-readable instructions generated by the autonomous system based on events having been observed by the autonomous system, the events having occurred during operation of the autonomous system in the environment;
upon observing, by the autonomous system, a new event in the environment:
generating a new dynamic environment property based on the new event;
entering the new dynamic environment property to the second database;
executing coherence checking on the new dynamic environment property and the static environment properties, the coherence checking comprising comparing the new dynamic environment property with the static environment properties to assess whether the new dynamic environment property conflicts with at least one of the static environment properties; and
identifying the new dynamic environment property as incoherent if determination is made that the new dynamic environment property conflicts with at least one of the static environment properties.

2. The method of claim 1, further comprising determining whether the new dynamic environment property is incoherent and, if the new dynamic environment property is incoherent:
accessing a third database populated with candidate objectives, each one of the candidate objectives comprising fourth computer-readable instructions which upon being executed by the autonomous system result in generating the first computer-readable instructions;
generating a new active objective from the candidate obj ectives based on the new event;
entering the new active objective to the list of active objectives.

3. The method of claim 1 or 2, wherein the execution of coherence checking comprises:
if determination is made that the new dynamic environment property is conflicting with at least one static environment properties of the first database, marking the new dynamic environment property as incoherent, a conflict between the new dynamic environment property and at least one static environment properties being caused by an opposition of their respective computer-readable instructions; and
identifying the new dynamic environment property as coherent otherwise.

4. The method of any one of claims 1 to 3, wherein generating a new active objective from the candidate objectives based on the new event comprises:
selecting a candidate objective from the candidate objectives of the third database;
generating new active objective parameters based on the new event; and
associating the new active objective parameters to the selected candidate objective.

5. The method of claim 4, wherein each candidate objective of the third database comprises an activation condition, the activation condition corresponding to one or more dynamic environment properties and the activation condition being fulfilled if determination is made that the corresponding one or more dynamic environment properties are found in the second database, and a selection of a candidate objective from the candidate objectives of the third database is based on the activation condition of the candidate objective.

6. The method of any one of claims 1 to 5, wherein the first database further comprises common-sense rules, each common-sense rule comprising fifth computer-readable instructions defining general properties of the entities and general relations between the entities, each general property being property of a group of entities and each general relation between the entities being relation between groups of entities.

7. The method of claim 6, wherein the common-sense rules are populated by an operator of the autonomous system and describe a cultural context of the environment in which the autonomous system is configured to operate.

8. The method of claim 7, wherein the operator employs a Machine Learning Algorithm (MLA) to generate one or more of the common-sense rules.

9. The method of any one of claims 6 to 8, wherein, upon entering a new dynamic environment property based on a new event in the second database, coherence checking is further executed on the new dynamic environment property and the common-sense rules, and if determination is made that the new dynamic environment property conflicts with at least one of the common-sense rules:
accessing the third database populated with candidate objectives;
generating a new active objective from the candidate obj ectives based on the new event; and
entering the new active objective to the list of active objectives.

10. The method of any one of claims 1 to 9, wherein upon entering a new dynamic environment property in the second database, coherence checking is further executed on the new dynamic environment property and the list of active objectives, and, if determination is made that the new dynamic environment property conflicts with at least one of the active objectives, removing the at least one of the active objectives from the list of active objectives.

11. The method of any of claims 1 to 10, wherein one or more dynamic environment properties describing meta-events are generated if determination is made that predefined combinations of dynamic environment properties are found in the second database, each predefined combination of dynamic environment properties corresponding to a meta-event and causing a generation of a corresponding dynamic environment property in the second database.

12. A computer-readable support comprising instructions which, upon execution of the instructions, cause a computer to carry out the steps of the method of any one of claims 1 to 11.

13. An autonomous system configured to manage a list of active objectives, each one of the active objectives comprising a set of parameters and first computer-readable instructions which upon being executed by the autonomous system results in the autonomous system performing a task in accordance with the set of parameters, the system comprising:
one or more sensing devices configured to detect events, the events occurring or having occurred in an environment in which the autonomous system is configured to operate;
a memory comprising:
a first database populated with static environment properties, the static environment properties comprising second computer-readable instructions defining properties of entities and relations between the entities, the entities and the relations between the entities defining the environment;
a second database populated with dynamic environment properties, the dynamic environment properties comprising third computer-readable instructions generated by the autonomous system based on the detected events.; and
a third database comprising candidate objectives;
and
a processor operably coupled to the memory and configured to execute instructions that, when executed, results in operations comprising:
upon observing, by the autonomous system, a new event in the environment:
generating a new dynamic environment property based on the new event;
entering the new dynamic environment property to the second database;
executing coherence checking on the new dynamic environment property and the static environment properties, the coherence checking comprising comparing the new dynamic environment property with the static environment properties to assess whether the new dynamic environment property conflicts with at least one of the static environment properties; and
if determination is made that the new dynamic environment property conflicts with at least one of the static environment properties:
accessing the third database populated with candidate objectives, each one of the candidate objectives comprising fifth computer-readable instructions which upon being executed by the autonomous system result in generating the first computer-readable instructions;
generating a new active objective from the candidate objectives based on the new event;
entering the new active objective to the list of active objectives.

14. The system of claim 13, wherein, upon executing coherence checking, the processor is further configured to:
if determination is made that the new dynamic environment property is conflicting at least one static environment properties of the first database, mark the new dynamic environment property as incoherent, a conflict between the new dynamic environment property and at least one static environment properties being caused by an opposition of their respective computer-readable instructions; and
identify the new dynamic environment property as coherent otherwise.

15. The system of claim 13 or 14, wherein the first database further comprises common-sense rules, each common-sense rule comprising fourth computer-readable instructions defining general properties of the entities and general relations between the entities, each general property being property of a group of entities and each general relation between the entities being relation between groups of entities.
